# EUROPEAN PATENT SPECIFICATION

(11) **EP 1 953 438 B1**
(45) Date of publication and mention of the grant of the patent: **13.02.2013**
(21) Application number: 07016101.3
(22) Date of filing: 16.08.2007
(51) Int. Cl.: F16L 5/00, F16L 5/02

(54) **Pipe-surrounding water-sealing material**
Rohr-umgebendes gegen Wasser abdichtendes Material
Matériau d'étanchéité à l'eau entourant les tuyaux

(30) Priority: 02.02.2007 JP 2007023706
(43) Date of publication of application: 06.08.2008
(73) Proprietor: Kunimine Industries Co., Ltd., Chiyoda-ku Tokyo 101-0032 (JP)
(72) Inventor: Tsuchiya, Atsutomo, Joban Iwaki-shi Fukushima 972-8312 (JP); Kurosaka, Keiichi, Joban Iwaki-shi Fukushima 972-8312 (JP); Iwasaki, Kentaro, Tokyo 101-0032 (JP)
(74) Representative: Forstmeyer, Dietmar

(56) References cited:
- EP-A- 0 344 868
- EP-A- 1 391 566
- DE-A1- 10 132 854
- DE-C1- 19 955 762
- JP-A- 2006 037 642
- US-A- 4 443 019

## Description

### FIELD OF THE INVENTION

The present invention relates to a water-sealing material to be fitted to the outer circumferential surface of a pipe, such as a pipe penetrating the outer wall of a structure and the like. In particular, the present invention relates to a pipe-surrounding water-sealing material that can reduce damages caused by construction defects, and remarkably reduce construction labor.

Exemples of closest prior art can be found in US 4 443 019 or JP 2006 037 642.

### BACKGROUND OF THE INVENTION

Heretofore, water-sealing materials used in the construction and civil engineering fields have been used for portions in which water leakage occurs, such as a concrete construction-joint part, a contact surface between concrete and other members, and a junction surface between concrete secondary products. The following are known as materials for such water-sealing materials: (1) water-sealing plates that block a water leakage path with a rubber plate buried in a construction-joint part, the rubber plate which is obtained by forming a rubber into a plate, and rubber-based water-sealing materials that block a water leakage path by chemical bonding of a rubber buried in a construction-joint part and concrete due to a concrete curing reaction and an ionic reaction; (2) organic material-based water-swelling water-sealing materials having water swelling functions, which are obtained by mixing a water-swelling polymer with a resin and/or rubber, the organic material-based water-swelling water-sealing materials exhibiting water-sealing effects by utilizing contact surface stress due to the expansion pressure attributable to the swelling functions; and (3) water-sealing panels or water-sealing ropes, in which powder or granular water-swelling clay, such as bentonite or smectite, is filled or held in a corrugated paper, nonwoven fabric, or the like, and inorganic-based water-swelling water-sealing materials which are obtained by kneading water-swelling clay and an adhesive composition in which a gel-formation base oil, asphalt, or the like, is utilized, to form into a shape.

Among the above-mentioned water-sealing materials, with respect to the above-mentioned (1), the water-sealing materials themselves are not water-permeable, but they cannot fill gaps generated upon concrete contraction at the timing of concrete curing, and they merely lengthen and complicate the water leakage path of the concrete construction-joint part. As a result, satisfactory water-sealing effects were not expected. The water-sealing materials mentioned in (1) are combined with concrete by a chemical reaction, and thus an effect of preventing water leakage from a gap generated upon concrete contraction can be expected. However, the water-sealing materials mentioned in (1) above pose problems that when the concrete deforms or moves due to contraction or external force, the resultant concrete is separated or peeled-off from the rubber, resulting in water leakage.

The water-sealing materials mentioned in (2) above absorb water and swell, which may expect to thereby produce an effect of filling a gap generated by concrete contraction. However, since the expansion pressure is high, the water-sealing materials mentioned in (2) pose problems of cracking and/or separation of concrete and/or breakage of a pipe, etc.

The water-sealing materials mentioned in (3) above are free from problems of cracking of concrete and breakage of a pipe, because no excessive swelling pressure is to be formed. However, the water-sealing materials that are referred to as water-sealing panels or water-sealing ropes suffer from dropping and/or uneven distribution of bentonite, and thus cannot stably exhibit water-sealing effects over a long period of time. In addition, due to their high swelling speeds, the water-sealing materials mentioned in (3) completely swell when floods by rainfalls, ground waters, etc. occur before placing the concrete in a prescribed portion, and thus water-sealing effects conspicuously are reduced.

Further, since the materials mentioned in (1) and (2) above are composed of organic materials, the water-sealing effects of the materials were lowered with the lapse of time. That lowering is caused, for example, by deterioration of the materials due to the environment where the materials are to be placed, decomposition of the materials by bacteria in the soil, and the like. Thus, the initial water-sealing effects cannot be maintained over a long period of time due to the nature of the materials themselves, which is a problem.

In the mean time, the following are heretofore known as methods for fitting a pipe-surrounding water-sealing material to the outer circumferential surface of a pipe, such as a pipe penetrating the outer wall of a structure and the like, to thereby construct the pipe-surrounding water-sealing material to a given portion: (4) methods for welding a collar composed of a metal or resin to the surrounding of a pipe, to thereby fit the collar to the pipe's surrounding; (5) methods for sticking around a pipe a water-sealing material having plasticity, by utilizing self-adhesion force, an adhesive, a double-sided tape, etc.; and (6) methods for fitting an annular fixed-form elastic material composed of rubber and the like around a pipe, to thereby clamp and fix the pipe with the annular material by elasticity of the rubber material. Among these methods, the methods mentioned in (4) above achieve extremely high resistance to external force, because a collar is fitted to a pipe by welding. However, tremendous labor and advanced skills are required for the process of the welding operation. In addition, the collar merely lengthens and complicates a water path of a boundary surface between a pipe and concrete, and the resultant water-sealing effects are not satisfactory. The methods mentioned in (5) above use materials having water-swelling functions in many cases, and thus higher water-sealing effects can be expected as compared with the methods mentioned in (4) above. However, the methods mentioned in (5) above pose problems of separation and/or dropping of the water-sealing materials due to poor adhesive strength or poor adhesion, and/or prior swelling or contraction deformation of the water-sealing materials, and/or external force caused by placing concrete.

On the other hand, the methods mentioned in (6) above are free from the problems of separation and dropping of the water-sealing materials composed of rubber. However, in the methods, a sleeve pipe is clamped for fixation, and thus elasticity becomes strong. Therefore, a considerably strong force is needed for construction because the clamping force changes into repulsive force at the timing of construction. In addition, due to the clamping force, a problem arises that a strong force is required for moving a construction site.

Currently, almost of the products used as pipe-surrounding water-sealing materials have rectangular cross sections, and some of such products are partially uneven. These shapes are determined considering water-sealing effects, but not considering workability and/or resistance against external force caused by placing concrete, etc. Thus, there is a problem that when pipe-surrounding water-sealing materials are fitted to a pipe by a primer, self-adhesion, etc., the pipe-surrounding water-sealing materials are separated (or peeled off) from an intended portion and/or shifted (or moved) to a portion not intended to apply the material due to external force, when poor adhesion or the like occurs. In addition, since a pipe-surrounding water-sealing material that has an annular shape and that is fixed to a pipe by clamping force of the material, the clamping force is considerably strong to counteract against external force, and thus the pipe-surrounding water-sealing material has such problems that a considerably strong force is required upon construction and workability is poor.

### SUMMARY OF THE INVENTION

The present invention resides in a pipe-surrounding water-sealing material, which is composed of an elastic composition, and which has an annular shape. Herein, the "pipe-surrounding water-sealing material" means a material of sealing water around a pipe. The "elastic composition" means a composition that is expansive and contractive.

Other and further features and advantages of the invention will appear more fully from the following description, appropriately referring to the accompanying drawings.

### BRIEF DESCRIPTION OF THE DRAWINGS

Fig. 1 is a plan view showing a pipe-surrounding water-sealing material according to one embodiment of the present invention.
Fig. 2 is a front view showing the pipe-surrounding water-sealing material according to the embodiment as shown in Fig. 1.
Fig. 3 is a perspective view showing the cut and developed pipe-surrounding water-sealing material according to the embodiment, as shown in Figs. 1 and 2.
Fig. 4 is an explanatory sectional view showing a ground contact area of a flat-portion of the pipe-surrounding water-sealing material having the shape shown in Fig. 1.
Fig. 5 is an explanatory sectional view showing a ground contact area of a curved-portion of the pipe-surrounding water-sealing material having the shape shown in Fig. 1.
Fig. 6 is a perspective view showing a cut and developed pipe-surrounding water-sealing material according to another embodiment of the present invention.
Fig. 7 is a schematic view of a tester for performing a test for validating resistance against external force.

### DETAILED DESCRIPTION OF THE INVENTION

According to the present invention, there is provided the following means:
(1) A pipe-surrounding water-sealing material, which is composed of an elastic composition, and which has an annular shape;
(2) The pipe-surrounding water-sealing material according to item (1), wherein the elastic composition has a water swelling property;
(3) The pipe-surrounding water-sealing material according to item (2), wherein the elastic composition having a water-swelling property contains a water-swelling clay mineral;
(4) The pipe-surrounding water-sealing material according to any one of items (1) to (3), wherein a cross section perpendicular to a target pipe has a substantially semicircular or semi-elliptic shape having a base side in contact with the pipe;
(5) The pipe-surrounding water-sealing material according to item (4), wherein an edge in the circumferential direction of the pipe-surrounding water-sealing material is beveled (or chamfered); and
(6) The pipe-surrounding water-sealing material according to any one of items (1) to (3), wherein a cross section perpendicular to a target pipe has a polygonal shape having a base side in contact with the pipe, and wherein an angle formed between the target pipe and a tangent of an upper shape of the polygonal shape is an obtuse angle.

Herein, the term "being composed of" means to include not only the case where the pipe-surrounding water-sealing material is made only of the elastic composition but also the case where the pipe-surrounding water-sealing material is made of the elastic composition and another optional component(s).

The pipe-surrounding water-sealing of the present invention is composed of an elastic composition, and has an annular shape. For the elastic composition used in the present invention, there is no need to use any organic material, such as rubber, which itself has elasticity. As the composition, a water-swelling composition is more preferable. As the water-swelling composition, a composition containing a water-swelling clay is preferable. The elastic composition that is preferably used in the present invention is a composition with high expansive-and-contractive property (flexibility), according to JIS K 6301, whose tensile strength is preferably 0.1 MPa or higher, and more preferably 0.15 MPa or higher, and whose elongation is preferably 200% or more, and more preferably 300% or more. Further, according to the aforementioned JIS K 6301, the compression permanent set of the elastic composition is preferably 65% or lower, and more preferably 50% or lower, and the impact resilience thereof is preferably 10% or more, and more preferably 20% or more.

Examples of the water-swelling composition that can be preferably used in the present invention include a water-swelling composition that is composed of 5 to 90 mass parts (preferably 5 to 80 mass parts) of a water-swelling clay mineral, 5 to 30 mass parts (preferably 5 to 20 mass parts) of an asphalt, 3 to 30 mass parts (preferably 5 to 25 mass parts) of an elasticity-imparting agent, and 5 to 40 mass parts (preferably 10 to 35 mass parts) of a plasticizer.

As the water-swelling clay mineral that can be used in the above-mentioned water-swelling composition, any of native or denatured water-swelling clay minerals may be used. Preferable is at least one selected from smectite-based clay minerals, such as bentonite, hectorite, etc., and swelling mica. Among these, bentonite is a particularly preferable clay mineral for the following reasons: bentonite is excellent in safety, because it is a naturally-produced inorganic clay mineral; bentonite is stable and a high water-sealing effect can be maintained over a long period of time, because bentonite is not decomposed by microorganisms in the soil; and bentonite is available at an inexpensive cost.

As the asphalt that can be used in the above-mentioned water-swelling composition, use may be made of any of natural asphalts, such as lake asphalt, asphaltite, rock asphalt, etc., or petroleum asphalts, such as straight asphalt, blown asphalt, etc. Further, any of modified asphalts, such as an asphalt compound, a rubberized asphalt, etc., can also be used.

Generally preferable as the elasticity-imparting agent that can be used in the above-mentioned water-swelling composition is one that can be used as an asphalt modifier, although not limited thereto. Examples of the elasticity-imparting agent include thermoplastic elastomers, such as styrene/butadiene block (SBS) copolymers, styrene/isoprene block copolymers, styrene/ethylene/butadiene block copolymers, etc. Further, preferable as the plasticizer that can be used in the above-mentioned water-swelling composition is an oil which can be obtained by refining petroleum and which is generally referred to as a process oil.

The above-mentioned water-swelling composition can include, as an optional component(s) in addition to the above-mentioned components, any of various additives that are conventionally used for water-sealing materials, if necessary, insofar as the excellent effects exhibited by the present invention are not adversely affected. Examples of the additive include softeners (e.g., oils, such as synthetic oils, fatty oils, etc.), stabilizers (e.g., anionic surfactants, nonionic surfactants, etc.), antifoaming agents, antifreezing agents, antioxidants, fillers, colorants, etc.

There is no limitation on the order and method for adding and mixing the components, in producing the above-mentioned water-swelling composition. The above-mentioned water-swelling composition can be obtained as a uniform mixture, by sufficiently mixing a water-swelling clay mineral, an asphalt, an elasticity-imparting agent, and a plasticizer. During this process, the mixing can be facilitated by heating. Generally, the mixing is sufficiently performed under heating at a temperature of 70 to 250°C, and preferably 100 to 200°C, preferably until a uniform mixture is given. During this process, a prolonged heating at a high temperature may lower the quality of the above-mentioned water-swelling composition, and thus heating is preferably performed within the above-mentioned temperature range.

The pipe-surrounding water-sealing material of the present invention, which utilizes an elastic composition and has an annular shape, has preferably in the following shape: that a cross section perpendicular to a target pipe to which the pipe-surrounding water-sealing material is applied, has a substantially semicircular shape or semi-elliptic shape in which a base side is in contact with the pipe, or has a polygonal shape in which a base side is in contact with the pipe, and that an angle that is formed between the tangent of the aforementioned shape (i.e. the substantially semicircular shape, the substantially semi-elliptic shape, or the polygonal shape) and the pipe is an obtuse angle. Further, the pipe-surrounding water-sealing material having a curved upper portion can be easily moved, by rotation of the pipe-surrounding water-sealing material to a construction site of the pipe, by beveling or chamfering an edge portion in the circumferential direction of the curved pipe-surrounding water-sealing material in advance.

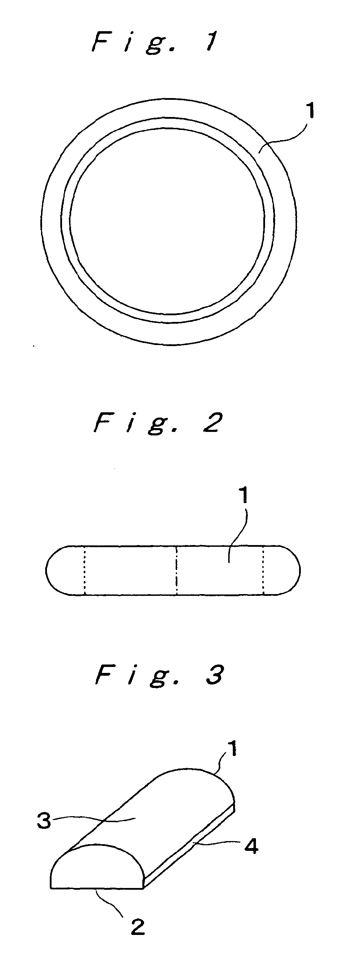

Fig. 1 is a plan view showing an annular (pipe-surrounding) water-sealing material 1 according to one embodiment of the present invention. Fig. 2 is a front view showing the water-sealing material 1 of Fig. 1. Fig. 3 is a perspective view schematically showing the water-sealing material 1 in a state cut and developed along the broken line (i.e. a dashed dotted line) shown in Fig. 2.

The water-sealing material 1 of this embodiment is constructed in such a manner that the upper surface of the pipe-surrounding water-sealing material 1 would have a curved shape, and a flat portion 2 would touch or be in contact with the pipe upon the construction, as shown in Fig. 3. The water-sealing material of the present invention can be applied and constructed to any pipes without particular limitation, and can be preferably used for pipes. The following explanation is given to the case where a sleeve pipe is used as a target pipe, and the pipe-surrounding water-sealing material 1 of this embodiment will be explained in more detail. This embodiment aims to achieve sufficient water-sealing effects of the side of the sleeve pipe by sufficiently increasing the area of a surface of the water-sealing material (1) in contact with the sleeve pipe. By increasing the area of the flat portion 2 to be more than that of a curved portion 3 in contact with the sleeve pipe, the flat portion 2 is more stably in contact with the sleeve pipe. Thus, when the pipe-surrounding water-sealing material is moved by rotation, the state where the curved portion 3 is in contact with the sleeve pipe becomes unstable, which is likely to result in the state where the flat portion 2 is in contact with the sleeve pipe. Therefore, the pipe-surrounding water-sealing material is moved by rotation to a construction site without being twisted.

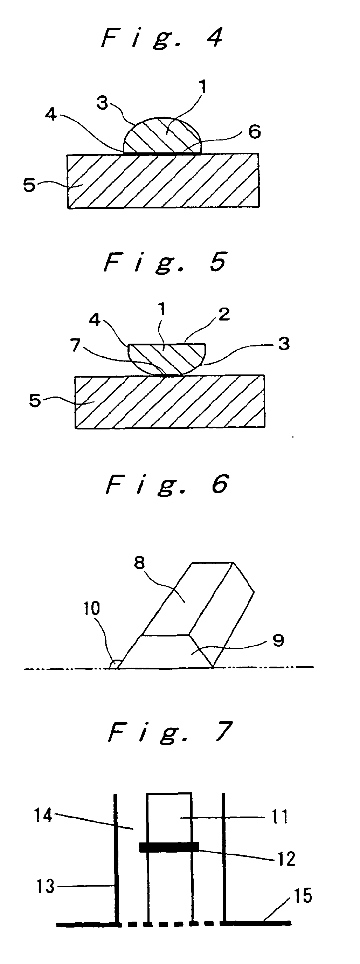

Fig. 4 is an enlarged sectional view showing a ground contact area 6 of a flat-portion in which the flat portion 2 is in contact with the sleeve pipe 5. Fig. 5 is an enlarged sectional view showing a ground contact area 7 of a curved portion in which the curved portion 3 is in contact with the sleeve pipe 5. With respect to the area ratio of the ground contact area (6) of the flat portion to the ground contact area (7) of the curved portion, the ground contact area 6 of the flat portion is preferably higher than the area ratio of 1:1, and more preferably equal to or higher than the area ratio {i.e. (6):(7)} of 3:1.

Further, the water-sealing material of the present invention can be more easily moved by rotation, by beveling the edge in the circumferential direction to form a chamfered part 4, as shown in Fig. 3. For construction, the conventional pipe-surrounding water-sealing material is enlarged more than the pipe diameter of sleeve pipe. Thus, enlarging the pipe-surrounding water-sealing material having a strong clamping force more than the pipe diameter of the sleeve pipe needs considerably high strength. However, by beveling the edge in the circumferential direction of the pipe-surrounding water-sealing material, the pipe-surrounding water-sealing material can be moved by rotation, which eliminates the necessity of utilizing strong force so as to enlarge the pipe-surrounding water-sealing material. Since the resistance against external force is increased due to the upper portion shape, the clamping force can be further reduced. This enables construction by weaker force than before, and thus the construction can be performed by females. The height of the surface, which is obtained by beveling the edge in the circumferential direction of the pipe-surrounding water-sealing material, is preferably to be reduced to 50% or less of the height of the pipe-surrounding water-sealing material. When exceeding this range, the effect of changing the horizontal force to the vertical force may become weak in some cases. Furthermore, according to the conventional construction methods, since the pipe-surrounding water-sealing material is excessively enlarged more than the pipe diameter of the sleeve pipe for construction, the pipe-surrounding water-sealing material needs to have an instantaneous expansive-and-contractive property. Thus, when the state where a gap is generated continues, there arises a problem that the pipe-surrounding water-sealing material unfavorably shifts or moves easily due to external force. However, according to the method for moving the pipe-surrounding water-sealing material by rotation, the pipe-surrounding water-sealing material is not excessively enlarged more than the pipe diameter of the sleeve pipe. Thus, a gap is not formed between the sleeve pipe and the pipe-surrounding water-sealing material when the water-sealing material is moved to a construction site, which results a high resistance against external force from immediately after the construction.

The curved portion 3 is in contact with concrete to be placed, and the concrete cures along the curved portion, with the result that sufficient water-sealing effects can be exhibited. The curved portion may be complicated by providing a projection(s) or the like on the surface thereof. However, when concrete fails to follow the projection(s) well, a water leakage path may be formed in the projection portion(s), to thereby cause a danger of increasing the possibility of water leakage. Thus, it is preferable to avoid a specific shape of the surface of the curved portion in which concrete fails to follow the shape.

The shape of the upper portion is not particularly limited to a curved shape, and a cross section may have a polygonal shape. Fig. 6 is a perspective view showing a pipe-surrounding water-sealing material 8 whose cross section has a trapezoid shape, as an example of the polygonal shape. The water-sealing material 8, as shown in Fig. 6, is in a state where an annular material is cut and developed along the cross section 9. The sleeve pipe in contact with the water-sealing material 8 at the site of the cross section 9 is shown by the phantom line (chain double-dashed line). When the cross section has a polygonal shape in which the line in contact with the pipe serves as a base line, as described in this embodiment, the cross section needs to be formed into a shape in which an angle 10 formed between the tangent of the shape of the upper surface of the pipe-surrounding water-sealing material and the sleeve pipe becomes an obtuse angle, and in which the ground contact area of the flat portion is higher than the area ratio {i.e. (the ground contact area of the flat portion):(the ground contact area of the upper portion)} of 1:1. Thus, the pressure to be applied when concrete is poured into a side of the pipe-surrounding water-sealing material can be reduced, which can facilitate movement to a construction site by rotation. Examples of the polygonal shape include a triangle, a trapezoid, a hexagon, etc.

The pipe-surrounding water-sealing material of present invention has excellent durability according to the life time of buildings and/or structures, exhibits a high water-impermeable property (waterproof property), prevents peeling off and/or shifting/dropping of the water-sealing material from the pipe due to external force, and is excellent in workabilities, such as fitting to and detaching from the pipe, moving of the water-sealing material to a construction site for the pipe, etc.

Since the pipe-surrounding water-sealing material of the present invention, basically, can be composed mainly of an inorganic substance(s), degradation thereof with the lapse of time is difficult to occur. Thus, the water-sealing performance of the pipe-surrounding water-sealing material is not lowered with the lapse of time, and thus a desired water-sealing effect can be maintained over a long period of time when it is used for buildings or structures. Further, the pipe-surrounding water-sealing material of the present invention is good in workability, and can be easily moved to a construction site. Moreover, a pipe-surrounding water-sealing material having a higher resistance against external force caused by placing concrete or the like, can be obtained. As a result, it is possible to obtain a pipe-surrounding water-sealing material free from peeling off/dropping, while preventing construction defects, such as poor adhesion and an insufficient adhesive strength. In addition, the water-sealing material can be easily moved to a construction site by, for example, inserting the water-sealing material in the upper portion of a pipe, by utilizing the expansive-and-contractive property thereof and rotating the resultant in such a manner that the front and rear surfaces are successively switched, which makes it possible to remarkably improve the workability.

Hereinafter, the present invention will be described in more detail based on the following examples, but the invention is not intended to be limited thereto. Rather, various aspects or embodiments that can be conceived from the above descriptions and the following disclosures should be encompassed in the scope of claims of the present invention.

### EXAMPLES

### Example 1

Using a kneader equipped with a heating jacket, 55 mass parts of a bentonite (manufactured by Kunimine Industries Co., Ltd.; trade name, Kunigel VA), 5 mass parts of a straight-asphalt of penetration number 60/80, 10 mass parts of an SBS copolymer, and 30 mass parts of a process oil were sufficiently mixed under heating at 170°C, to thereby prepare a water-swelling composition. A given amount of the thus-obtained water-swelling composition was poured, in a molten state under heating, into a mold in such a manner that the cross section would be formed into an equilateral triangle, to thereby shape the water-swelling composition. The end portions of the thus-obtained samples were adhered with each other, to give Sample 1 of an annular shape. Separately, a non-annular (rectangular strip-shaped) sample as it was taken out from the mold is designated to as Sample 2, as a reference example.

### Example 2

A given amount of the water-swelling composition as used in Example 1 was poured, in a molten state under heating, into a mold in such a manner that the cross section would be formed into a semicircular shape, to thereby shape the water-swelling composition. The end portions of the thus-obtained samples were adhered with each other, to give Sample 3 of an annular shape. Separately, a non-annular (rectangular strip-shaped) sample as it was taken out from the mold is designated to as Sample 4, as a reference example.

### Example 3

A given amount of the water-swelling composition as used in Example 1 was poured, in a molten state under heating, into a mold in such a manner that the cross section would be formed into a trapezoid shape, to thereby shape the water-swelling composition. The end portions of the thus-obtained samples were adhered with each other, to give Sample 5 of an annular shape. Separately, a non-annular (rectangular strip-shaped) sample as it was taken out from the mold is designated to as Sample 6, as a reference example.

### Example 4

A given amount of the water-swelling composition as used in Example 1 was poured, in a molten state under heating, into a mold in such a manner that the cross section would be formed into a rectangular shape, to thereby shape the water-swelling composition. The end portions of the thus-obtained samples were adhered with each other, to give Sample 7 of an annular shape. Separately, a non-annular (rectangular strip-shaped) sample as it was taken out from the mold is designated to as Sample 8, as a reference example.

The thus-obtained samples were validated for the resistance against external force, according to the following method. The cross-section size was fixed to a base plane in contact with a sleeve pipe to be 14 mm in width and the height from the base plane to the top end to be 10 mm. The inner diameters of the annular samples were made uniform, and the lengths of the non-annular samples taken out from the molds were made uniform.

### Test Example

### <Validation test for resistance against external force>

A test piece to be used for a validation test for resistance against external force is explained with reference to Fig. 7. A pipe-surrounding water-sealing material 12 was constructed to an inner sleeve pipe 11. A non-annular water-sealing material was constructed using a primer, followed by being left to stand for 24 hours, while the inner sleeve pipe 11 was kept standing. The annular pipe-surrounding water-sealing material was moved to a construction site by rotation, and was fixed with the elasticity of the pipe-surrounding water-sealing material. Then, an external sleeve pipe 13 was placed in such a manner that a space 14 between the external sleeve pipe 13 and the inner sleeve pipe 11 to which the water-sealing material was constructed would be set to about 50 mm. Silica sand as likened to concrete was made to flow through the space 14. Then, it was confirmed whether the constructed pipe-surrounding water-sealing material was peeled off, shifted or moved from, and/or twisted at the constructed site due to the flow. The silica sand to flow was made to pass through the space (14), by placing the sleeve pipe on a metal lattice 15. The silica sand was made to flow at 100 g per second and 500 g per second, respectively, for 30 seconds. The results are shown in Table 1.

**Table 1**

| Sample | State of the sample after the test | | | | | | Remarks |
|---|---|---|---|---|---|---|---|
| | 100 g/sec | | | 500 q/sec | | | |
| | Shift | Peeling off | Twist | Shift | Peeling off | Twist | |
| 1 | 0 mm | None | None | 0 mm | None | None | This invention |
| 2 | 0 mm | None | None | 0 mm | None | None | Reference example |
| 3 | 0 mm | None | None | 0 mm | None | None | This invention |
| 4 | 0 mm | None | None | 0 mm | None | None | Reference example |
| 5 | 0 mm | None | None | 0 mm | None | None | This invention |
| 6 | 0 mm | None | None | 0 mm | None | None | Reference example |
| 7 | 0 mm | None | None | 17 mm | None | 90° | This invention |
| 8 | 0 mm | None | None | 0 mm | Peeled off at the end portion | - | Reference example |

As is apparent from the results shown in Table 1, with respect to the samples according to the present invention, no phenomenon of peeling-off/shifting/twisting was observed, at 100 g per second. Further, even if the external force was increased as high as 500 g per second, the Samples 1, 3, and 5 decreased the external force, and thus no phenomenon of peeling-off/shifting/twisting was observed. However, since the Sample 7 did not decrease the external force, phenomena of shifting/twisting were observed. Further, the Sample 8 was peeled off and dropped off at 500 g per second. Furthermore, although not shown in Table 1, in the case of insufficient bonding in the Samples 2, 4, and 6, no phenomenon of peeling-off/shifting/twisting was observed, at 100 g per second, but these samples were peeled off and dropped off, at 500 g per second.

Having described our invention as related to the present embodiments, it is our intention that the invention not be limited by any of the details of the description, unless otherwise specified, but rather be construed broadly within its scope as set out in the accompanying claims.

## Claims

1. A pipe-surrounding water-sealing material, which is composed of an elastic composition, and which has a continuously annular shape, wherein the elastic composition comprises 5 to 90 mass parts of a water-swelling clay mineral, 5 to 30 mass parts of an asphalt, 3 to 30 mass parts of an elasticity- imparting agent, and 5 to 40 mass parts of a plasticizer; and wherein a cross section perpendicular to a target pipe has a substantially semicircular or semi-elliptic shape having a base side in contact with the pipe, or wherein a cross section perpendicular to a target pipe has a polygonal shape having a base side in contact with the pipe, and wherein an angle formed between the target pipe and a tangent of an upper shape of the polygonal shape is an obtuse angle; and wherein an edge in the circumferential direction of the pipe-surrounding water-sealing material is beveled..

2. The pipe-surrounding water-sealing material according to claim 1, wherein the elastic composition has a water swelling property.

3. The pipe-surrounding water-sealing material according to claim 1, wherein the water-swelling clay mineral is a bentonite.

## Patentansprüche

1. Rohr-umgebendes gegen Wasser abdichtendes Material, das aus einer elastischen Zusammensetzung zusammen gesetzt ist und das eine kontinuierlich ringförmige Form aufweist, wobei die elastische Zusammensetzung 5 bis 90 Massenteile eines durch Wasser quellenden Tonminerals, 5 bis 30 Massenteile eines Asphalts, 3 bis 30 Massenteile eines Elastizität verleihenden Mittels, und 5 bis 40 Massenteile eines plastisch machenden Zusatzes umfasst; und wobei ein senkrecht zu einem Zielrohr genommener Querschnitt eine im wesentlichen halbrunde oder halbelliptische Form mit einer Basisseite im Kontakt mit dem Rohr aufweist, oder wobei ein senkrecht zu einem Zielrohr genommener Querschnitt eine im wesentlichen polygonale Form mit einer Basisseite im Kontakt mit dem Rohr aufweist, und wobei ein Winkel, der zwischen dem Zielrohr und einer Tangente einer oberen Form der polygonalen Form gebildet wird, ein stumpfer Winkel ist; und wobei eine Kante in der peripheren Richtung des Rohr-umgebenden gegen Wasser abdichtenden Materials abgeschrägt ist.

2. Rohr-umgebendes gegen Wasser abdichtendes Material nach Anspruch 1, wobei die elastische Zusammensetzung eine Eigenschaft aufweist, durch Wasser zu quellen.

3. Rohr-umgebendes gegen Wasser abdichtendes Material nach Anspruch 1, wobei das durch Wasser quellende Tonmineral ein Bentonit ist.

## Revendications

1. Matériau d'étanchéité à l'eau entourant un tuyau, qui est composé d'une composition élastique, et qui présente une forme annulaire continue, dans lequel la composition élastique comprend 5 à 90 parties en masse d'un minéral argileux gonflant dans l'eau, 5 à 30 parties en masse d'un asphalte, 3 à 30 parties en masse d'un agent conférant de l'élasticité, et 5 à 40 parties en masse d'un plastifiant ; et
dans lequel une section transversale perpendiculaire à un tuyau cible présente une forme essentiellement semi-circulaire ou semi-elliptique ayant un côté de base en contact avec le tuyau, ou dans lequel une section transversale perpendiculaire à un tuyau cible présente une forme polygonale ayant un côté de base en contact avec le tuyau, et où un angle formé entre le tuyau cible et une tangente d'une forme supérieure de la forme polygonale est un angle obtus ; et dans lequel un bord dans la direction circonférentielle du matériau d'étanchéité à l'eau entourant un tuyau est biseauté.

2. Matériau d'étanchéité à l'eau entourant un tuyau selon la revendication 1, dans lequel la composition élastique présente une propriété de gonflement dans l'eau.

3. Matériau d'étanchéité à l'eau entourant un tuyau selon la revendication 1, dans lequel le minéral argileux gonflant dans l'eau est une bentonite.
